**Europäisches Patentamt**

**European Patent Office**

**Office européen des brevets**

(11) Numéro de publication: **0 152 313**
**B1**

(19)

(12) # FASCICULE DE BREVET EUROPÉEN

(45) Date de publication du fascicule du brevet:
18.05.88

(51) Int. Cl.⁴: **H 02 P 7/00, B 60 L 11/18**

(21) Numéro de dépôt: **85400044.5**

(22) Date de dépôt: **10.01.85**

(54) Dispositif de correction des écarts de déplacement des roues d'un mobile programmé.

(30) Priorité: **11.01.84 FR 8400350**

(43) Date de publication de la demande:
**21.08.85 Bulletin 85/34**

(45) Mention de la délivrance du brevet:
**18.05.88 Bulletin 88/20**

(84) Etats contractants désignés:
**AT BE CH DE FR GB IT LI LU NL SE**

(56) Documents cité:
**EP-A-0 044 773**
**GB-A-2 141 246**

**BYTE, vol. 21, no. 6, juin 1977, pages 30–45, Peterborough, US; R. HOLLIS: "A mobile cognitive robot"**

(73) Titulaire: **JEULIN, Société dite:, 28 rue Lavoisier Zone Industrielle no. 2, F-27031 Evreux (FR)**

(72) Inventeur: **Mobailly, Alain, Les Charmilles rue de la Libération, F-27000 Evreux (FR)**

(74) Mandataire: **Chevallier, Robert Marie Georges, Cabinet BOETTCHER 23, rue La Boétie, F-75008 Paris (FR)**

## Description

L'invention a pour objet un dispositif se montant sur un mobile programmé qui a deux roues motrices indépendantes dont les vitesses linéaires, et donc les distances parcourues, ne sont pas identiques pour des raisons diverses comme: les tolérances de fabrication mécanique, les usures inégales, les charges réparties différemment, etc ...

Un tel mobile programmé selon le préambule des revendications 1 et 3 est décrit dans le journal "Byte" vol. 21, no. 6, juin 1977, pages 30 à 45.

Comme mobile programmé auquel l'invention est applicable on peut dussi citer les petits véhicules appelés "souris" ou "tortues" qui se déplacent en se conformant aux instructions d'un programme préétabli. Un tel mobile doit souvent décrire différentes figures géométriques, principalement quand il est utilisé pour l'exécution d'exercices pratiques dans le cadre de l'enseignement, à l'occasion de cours de mathématiques, de mécanique ou de micro-informatique.

On équipe souvent un tel mobile d'un élément traceur pour qu'il puisse tracer sa trajectoire sur le plan où il est posé. Quand il revient à son point de départ après avoir décrit des courbes, des lignes brisées, le point de retour doit être pratiquement confondu avec le point de départ; autrement dit les deux points ne doivent différer que de quelques dixièmes de millimètre.

Pour que le mobile puisse effectuer des retours en arrière en ne traçant qu'une seule ligne à points de rebroussement, l'élément traceur est disposé sur la verticale de son centre d'inertie, à égale distance entre deux roues motrices. Ces dernières sont des roues indépendantes entraînées chacune par un moteur pas à pas dont la rotation est commandée individuellement par un programme préenregistré.

Avec un mobile qui a deux roues motrices espacées d'une distance $e$, ayant chacune un diamètre $d$, quand ce mobile tourne autour de la verticale passant entre ces roues à égale distance de l'une et de l'autre, il tourne sur lui-même exactement autour de cette verticale quand les deux roues décrivent des chemins identiques. Pour un angle $b$ de rotation du mobile sur lui-même, chaque roue doit parcourir un arc de cercle égal à $b \cdot e/2$ en tournant d'un angle $a$ et en roulant sur une distance égale à $a \cdot d/2$. Il en résulte pour chaque roue l'égalité $b = a \cdot d/e$.

Or, le rapport $\frac{d}{e}$ n'a pas une valeur constante; il dépend des tolérances mécaniques affectant la distance $e$ et le diamètre $d$ des roues. Il pourrait être corrigé et ajusté mécaniquement au moment de la construction des mobiles. Outre que cette manière de faire est coûteuse, elle n'est pas suffisante puisque le rapport $\frac{d}{e}$ dépend aussi de l'usure des roues ou de l'écrasement différent de leur bandage caoutchouté, pour des raisons diverses (matière non homogène, charge excentrée, charge variable, etc..).

L'invention a pour but principal de parvenir à un dispositif qui permet d'imposer à un mobile du type défini plus haut une trajectoire parfaitement déterminée quelles que soient ses imperfections mécaniques, plus précisément quelles que soient les différences dimensionnelles qui affectent la distance $e$ et les diamètres $d$ des roues.

Un dispositif conforme à l'invention est constitué par un circuit correcteur relié aux circuits de programmation qui commandent à chaque moteur pas à pas accouplé à une roue l'exécution d'un nombre déterminé de pas, ce circuit correcteur modifiant le nombre déterminé de pas dans le sens voulu pour compenser l'écart dû aux imperfections mécaniques.

Quand la roue tourne dans un sens, par exemple dans le sens de la marche avant, le nombre déterminé de pas est modifié par addition ou par soustraction (selon le défaut à corriger) d'un nombre correcteur de pas à chaque quantité $q$ de pas à exécuter.

Selon un premier mode de réalisation de l'invention tel que spécifié dans la revendication 1, le circuit correcteur comprend un commutateur à 5 contacts électriques bistables, ayant donc chacun deux états dont l'un est l'état 0 et l'autre l'état 1, permettant de représenter 32 valeurs décimales à l'aide desquelles on peut introduire le nombre correcteur qui doit être ajouté ou retranché à chaque quantité $q$ de pas programmés à exécuter.

Un circuit correcteur ainsi conçu est relié à un microprocesseur à programmation pour indiquer à ce dernier pendant le déroulement du programme un nombre correcteur devant modifier le nombre de pas exécutés par les roues, par rapport au nombre de pas commandé par la programmation - par exemple à chaque quantité $q$ de pas à exécuter - en compensation des écarts dus aux imperfections mécaniques.

Il est prévu dans le circuit correcteur un commutateur à cinq contacts électriques bistables, ce qui permet d'introduire 32 valeurs décimales allant de 0 à 31 en fonction de l'état ouvert ou fermé donné à chaque contact. Il est apparu aussi qu'il est possible de choisir, pour la quantité $q$ de pas nécessitant une correction, la valeur de 2880 pas avec des moteurs pas à pas faisant 48 pas par tour et accouplés à la roue correspondante par l'intermédiaire d'un réducteur de rapport 1/30.

Il est clair que, après un réglage initial qui peut être fait en usine, le nombre correcteur doit ensuite être déterminé par l'utilisateur et introduit manuellement par lui dans le circuit correcteur à l'aide du commutateur décrit ci-dessus.

Il est apparu que cette opération n'est pas toujours exécutée correctement et, surtout, qu'elle n'est pas renouvelée de temps en temps par l'utilisateur, ce qui serait nécessaire pour tenir compte de l'usure ou des accidents survenus au mobile, dont l'effet exige de changer la valeur du nombre correcteur.

Par conséquent, selon un autre mode préféré de réalisation de l'invention tel que specifié dans la revendication 3, on évite de monter dans le circuit correcteur le commutateur mentionné plus haut et on équipe le mobile d'un détecteur d'un type quelconque approprié (optique, magnétique, électrique, etc...) capable de détecter un repère convenable (trace, aimant, lumière, etc ..) déposé sur le sol sur lequel circule ce mobile.

Avec les deux modes de réalisation de l'invention, on exécute la correction en commençant par faire exécuter au mobile un déplacement qui comprend une rotation sur lui-même de 360°, autour de son axe géométrique principal. En cas d'imperfection, le mobile ne se retrouve pas exactement à sa position de départ après avoir exécuté le déplacement prévu, ou bien il exécute une rotation différente de 360° pour se retrouver à sa position de départ. L'écart qui existe sert à déterminer la correction à apporter, de la façon que l'on expliquera maintenant en se reportant aux dessins annexés dans lesquels:

- la figure 1 est une représentation schématique des deux roues d'un mobile ef fectuant un tour sur lui-même,
- la figure 2 est un schéma montrant comment déterminer le nombre correcteur que l'on introduit ensuite à l'aide du commutateur,
- la figure 3 est un schéma synoptique qui indique comment est branché le circuit correcteur de l'invention dans un mobile programmé,
- la figure 4 est un schéma synoptique qui montre les circuits du mobile prévus pour l'exécution de la correction par ce mobile lui-même,
- la figure 5 est un schéma montrant comment le mobile se déplace pour déterminer la correction à exécuter.

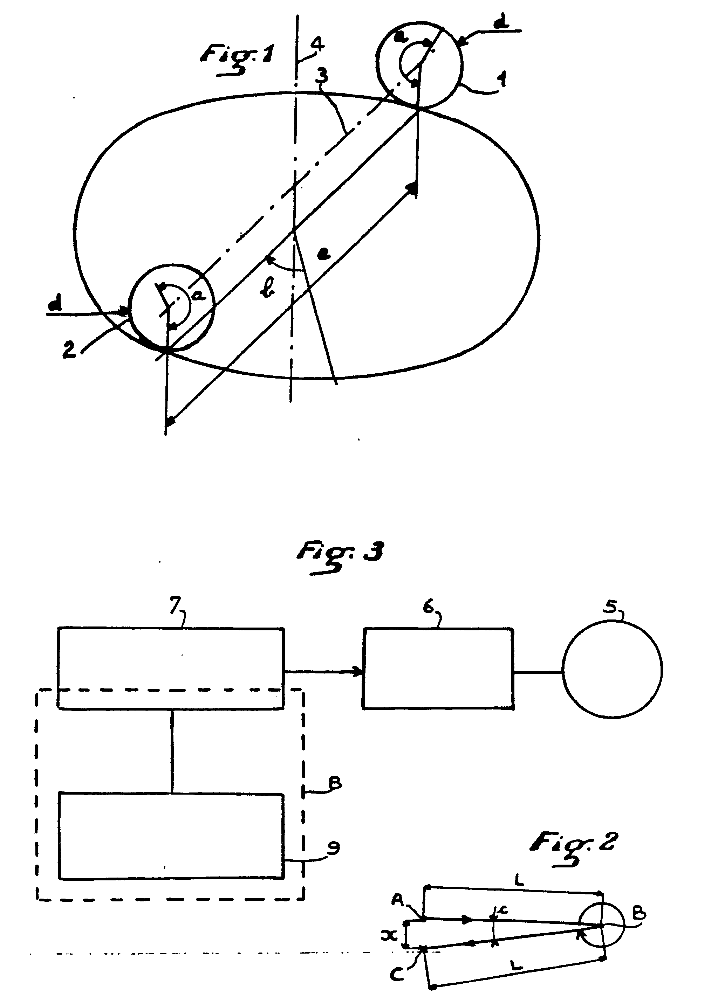

La figure 1 montre seulement les deux roues motrices 1 et 2 d'un mobile programmé; elles ont chacune un diamètre $d$ et elles sont écartées d'une distance $e$ sur un axe commun de rotation désigné par la référence 3. Au milieu de ce dernier passe un axe vertical 4 qui est l'axe général du mobile. Quand celui-ci tourne sur lui-même autour de cet axe 4 d'un angle $b$, chaque roue doit parcourir une distance b · e/2, ce qui veut dire que chaque roue doit tourner exactement d'un angle $a$ afin que l'égalité b · e/2 = a · d/2 soit satisfaite. Si l'axe vertical 4 n'est pas exactement équidistant des roues 1 et 2 et si les diamètres d de ces dernières ne sont pas rigoureusement égaux, le mobile se déplacera autour de son axe 4 au lieu de tourner sur lui-même.

On se reportera maintenant à la figure 2 qui correspond à la manière de déterminer le nombre correcteur quand ce dernier doit être introduit manuellement à l'aide d'un commutateur conformément au premier mode de réalisation de l'invention. On fait se déplacer le mobile à partir d'un point A, en ligne droite sur une distance L, par exemple sur 500 mm, jusqu'à un point B. On commande alors au mobile l'exécution d'une rotation de 360° sur lui-même autour de son axe 4 puis on le fait revenir en marche arrière, en ligne droite, sur une distance identique L.

Si le mobile était parfait, il reviendrait exactement au point A. En raison des imperfections, il s'arrête à un point C qui est distant du point A d'une longueur $x$ et les deux droites AB et BC font un angle $c$ que l'on peut déterminer facilement en admettant que tg c = x/500.

Quand la distance $e$ entre les roues 1, 2 vaut 300 mm et le diamètre $d$ de chaque roue 50 mm, chaque roue doit faire 6 tours quand le mobile fait un tour sur lui-même; par conséquent, avec un réducteur de rapport 1/30 accouplé entre chaque roue et chaque moteur faisant 48 pas par tour, on voit que chaque moteur doit faire 6 x 30 x 48 = 8640 pas pour un tour sur lui-même du mobile. Chaque pas des moteurs correspond donc à un angle de rotation du mobile autour de l'axe 4 de 360°/8640 = 0,0417°. Le rapport angle $c$/0,0417 donne le nombre de pas qu'il aurait fallu imposer aux roues, en supplément dans cet exemple, pour que la distance $x$ soit nulle et que les points A et C soient confondus.

Une telle correction est d'une grande précision et on peut se demander si elle est nécessaire avec une construction mécanique de qualité courante. Plus la qualité mécanique est mauvaise, moins elle coûte cher mais aussi plus la correction électrique compensatrice doit être importante et précise, plus elle coûte cher.

Dans le cadre de l'invention, il a été établi qu'il est préférable d'adopter une capacité de corréction unitaire de 0,125° seulement; une telle correction est satisfaisante avec une construction mécanique de qualité courante et elle se réalise à l'aide de moyens électriques économiques. Cette capacité de correction unitaire de 0,125° correspond à 3 pas de plus ou de moins du moteur pour une rotation de 360° du mobile sur lui-même, ce qui revient à une correction de 1 pas pour 8640/3 = 2880 pas que doit exécuter le moteur ou de 1 pas pour 96 pas que doit effectuer la roue correspondante.

On effectue alors avantageusement cette correction à l'aide d'un circuit correcteur comprenant un commutateur, disponible dans le commerce, à 5 contacts électriques bistables qui permet en attribuant à chaque contact la valeur 0 à l'état ouvert et les valeurs respectives 1 - 2 - 4 - 8 - 16 à l'état fermé d'introduire 32 valeurs décimales (de 0 à 31) dans le circuit correcteur. Ce nombre correcteur maximum de 31 pas pour 2880 pas (une rotation de 120°) du moteur est largement suffisant avec une qualité courante de la mécanique et une usure prévisible normale.

Après calcul comme expliqué plus haut de l'écart dû aux imperfections mécaniques, écart qui se modifie dans le temps, on introduit le nombre, choisi entre 0 à 31 pas, que le circuit correcteur impose à chaque quantité $q$ fixée à 2880 pas chaque fois qu'un moteur doit effectuer cette quantité $q$ de pas conformément aux instructions qui proviennent des circuits de programmation.

En se reportant à la figure 3, on voit que dans un mobile ayant pour l'entraînement de chaque roue motrice 1 ou 2 un moteur correspondant 5, ce moteur est raccordé à un circuit de commande 6 qui le met en fonction conformément à des instructions qui lui parviennent d'un microprocesseur 7; celui-ci traduit un programme qui - ne fait pas partie de l'invention - et qui détermine les évolutions du mobile. La traduction consiste à fournir à chaque circuit de commande 6 les ordres d'exécution d'un certain nombre de pas du moteur dans un sens ou dans le sens opposé d'où découlent les mouvements désirés du mobile. Le circuit correcteur 8 qui comprend le commutateur 9 décrit plus haut est relié au microprocesseur 7; ce dernier apporte la correction qui a été indiquée à l'aide du commutateur 9 chaque fois que le programme contient une quantité $q$ de pas à exécuter dans un même sens par le moteur 5 correspondant.

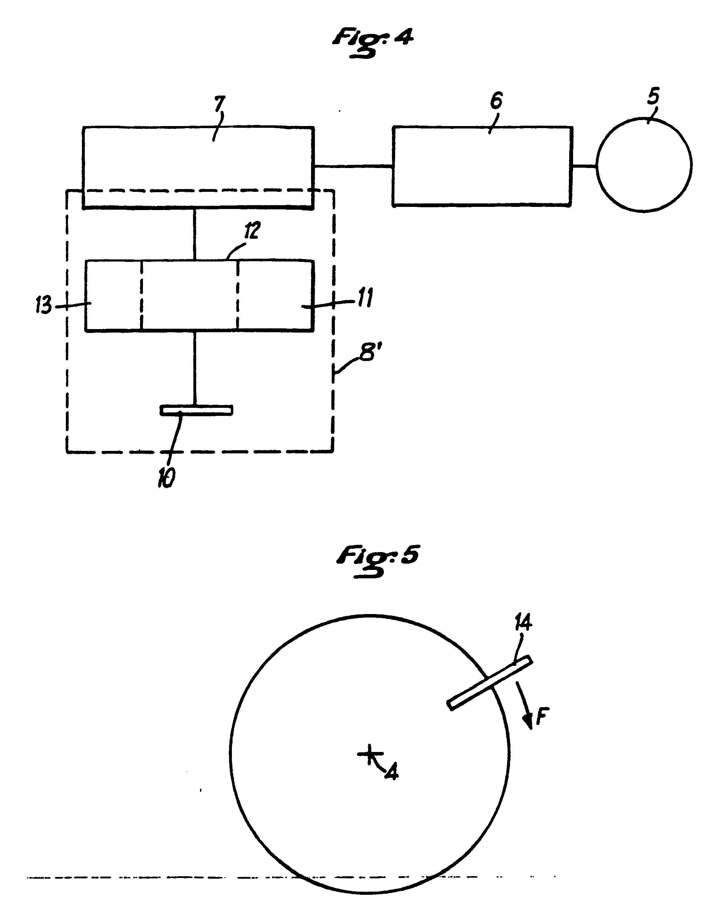

Quand, selon le mode préféré de réalisation de l'invention, le mobile est prévu pour exécuter lui-même la correction nécessaire, il est équipé, comme moyen de détection, d'un interrupteur à lame souple 10 (figure 4) et le circuit correcteur 8' comprend, en remplacement du commutateur 9, un circuit compteur de pas 11 associé à un comparateur 12 et à un circuit de mémorisation 13 permettant d'enregistrer d'une part le nombre théorique de pas du moteur 5 pour un tour complet de 360° du mobile autour de son axe, d'autre part la différence qui représente le nombre correcteur - de ce nombre théorique par rapport au nombre réel de pas exécutés pendant un tour complet de 360°. L'ensemble du circuit 11 compteur de pas, du comparateur 12 et du circuit de mémorisation 13 est relié au microprocesseur 7.

La figure 5 montre la manière de faire pour la détermination automatique, par le mobile lui-même, du nombre correcteur, conformément au mode préféré de réalisation de l'invention.

Le mobile étant équipé de l'interrupteur à lame souple 10 servant de moyen de détection, on utilise alors comme repère une bande aimantée 14, de préférence étroite et allongée, que l'on dépose sur le sol puis on fait faire au mobile une rotation sur lui-même autour de son axe 4, de telle sorte qu'en tournant comme indiqué par une flèche F, l'interrupteur à lame souple 10 soit influencé deux fois par la bande aimantée 14. De cette façon, le mobile a bien effectué une rotation de 360°. Le circuit compteur de pas 11 compte le nombre réel des pas exécutés et la comparaison par le comparateur 12 avec le nobre théorique conservé en mémoire fait connaître la différence. Celle-ci peut être rapportée par le microprocesseur 7 à un nombre prédéterminé de pas, par exemple 2880 comme expliqué plus haut.

On pourrait prévoir de faire exécuter plusieurs tours par le mobile au-dessus de la bande aimantée 14 pour obtenir une plus grande précision, et faire claculer ensuite par le microprocesseur 7 le nombre correcteur rapporté à un tour.

Ainsi qu'on l'a déjà dit, le nombre correcteur peut être ramené, par le microprocesseur 7 convenablement programmé à la quantité $q$ de 2880 pas des moteurs afin que la correction chaque fois qu'un moteur doit effectuer cette quantité $q$ de pas.

Pendant le fonctionnement du mobile, le microprocesseur 7 augmente du nombre correcteur le nombre de pas exécutés; la correction consiste le plus souvent en une addition par suite de l'usure des roues. La correction est faite aussi pendant les déplacements en ligne droite afin que la distance parcourue par le mobile soit exacte. Quand le nombre correcteur a été déterminé par un nombre théorique de 2880 pas, il est préférable de répartir également ce nombre sur l'ensemble des 2880 pas. Par exemple, si le nombre correcteur déterminé est 18, le microprocesseur 7 ajoutera 1 pas à chaque quantité de 160 pas exécutés ($2880 = x 18$).

**Revendications**

1. Dispositif de correction des imperfections mécaniques se traduisant par des écarts de déplacement des roues d'un mobile ayant deux roues motrices indépendantes (1, 2) entraînées chacune par un moteur pas à pas correspondant, montées autour d'un même axe (3) et effectuant des mouvements divers commandés par un microprocesseur à programmation, caractérisé en ce qu'un circuit correcteur est relié à ce microprocesseur pour indiquer à ce dernier un nombre correcteur modifiant le nombre de pas exécutés par les roues, par rapport au nombre de pas commandé par la programmation, en compensation des écarts dus aux imperfections mécaniques, ce circuit correcteur comprenant un moyen d'introduction d'un nombre correcteur prédéterminé de pas à chaque quantité $q$ de pas à exécuter par chaque moteur, à 5 contacts électriques bistables ayant chacun, dans un premier état la signification 0, et dans un second état respectivement l'une des significations 1 - 2 - 4 - 8 - 16, avec une capacité de correction unitaire de 0,125° de rotation du moteur.

2. Dispositif selon la revendication 1 caractérisé en ce que la capacité de correction unitaire du circuit correcteur correspond à 1 pas pour chaque quantité de 96 pas que doit effectuer chaque roue (1, 2).

3. Dispositif de correction des imperfections mécaniques se traduisant par des écarts de déplacement des roues d'un mobile ayant deux roues motorices indépendantes (1, 2) entraînées chacune par un moteur pas à pas correspondant, montées autour d'un même axe (3) et effectuant des mouvements divers commandés par un microprocesseur à programmation, caraqtérisé en ce qu'un circuit correcteur est relié à microprocesseur pour indiquer à ce dernier un nombre correcteur modifiant le nombre de pas exécutés par les roues, par rapport au nombre de pas commandé par la programmation, en compensation des écarts dus aux imperfections mécaniques, et en ce que le dispositif comprend un détecteur monté sur le mobile pour détecter un repère posé sur le sol sur lequel roule ce mobile quand celui-ci tourne sur lui-même autour de son axe vertical général (4) et le circuit correcteur (8') comprend un compteur (11) et un comparateur (12) pour compter et comparer le nombre réel de pas exécutés au nombre théorique de pas pour l'exécution d'un tour et en déduire le nombre correcteur.

4. Dispositif selon la revendication 3 caractérisé en ce que le détecteur est un interrupteur à lame souple (10) sensible à une bande aimantée (14) servant de repère.

**Patentansprüche**

1. Schaltung zur Korrektur mechanischer Fehler, die sich durch Abweichungen der Räder eines mobilen Gerätes übertragen, das zwei unabhängige, angetriebene Räder (1, 2) aufweist, von denen jedes schrittweise von einem Motor entsprechend angetrieben wird, die an derselben Achse (3) gehalten sind und die von einem Mikroprozessor programmgemäß gesteuerte unterschiedliche Bewegungen ausführen, dadurch gekennzeichnet, daß ein Korrekturschaltkreis mit dem Mikroprozessor verbunden ist, um dem letzteren zur Kompensation der Abweichungen aufgrund von mechanischen Fehlern eine Korrekturzahl anzugeben, die die Anzahl der von den Rädern auszuführenden Schritte gegenüber der Anzahl der vom Programm vorgegebenen Schritte modifiziert, wobei der Korrekturschaltkreis ein Eingabemittel für eine vorbestimmte Schritt-Korrekturzahl bei jeder Quantität q von von jedem Motor auszuführenden Schritten mit fünf bistabilen elektrischen Kontakten aufweist, von denen jeder in einem ersten Zustand die Signifikanz 0 und in einem zweiten Zustand eine der Signifikanzen 1 - 2 - 4 - 8 - 16 mit einer Einheitskorrekturfähigkeit von 0,125° der Motorumdrehung besitzt.

2. Schaltung nach Anspruch 1, dadurch gekennzeichnet, daß die Einheitskorrekturfähigkeit des Korrekturschaltkreises für jede Quantität von 96 Schritten, die jedes Rad (1, 2) ausführen muß, einem Schritt entspricht.

3. Schaltung zur Korrektur mechanischer Fehler, die sich durch Abweichungen der Räder eines mobilen Gerätes übertragen, das zwei unabhängige, angetriebene Räder (1, 2) aufweist, von denen jedes schrittweise von einem Motor entsprechend angetrieben wird, die an derselben Achse (3) gehalten sind und die von einem Mikroprozessor programmgemäß gesteuerte, unterschiedliche Bewegungen ausführen, dadurch gekennzeichnet, daß ein Korrekturschaltkreis mit dem Mikroprozessor verbunden ist, um dem letzteren zur Kompensation der Abweichungen aufgrund von mechanischen Fehlern eine Korrekturzahl anzugeben, die die Anzahl der von den Rädern auszuführenden Schritte gegenüber der Anzahl der vom Programm vorgegebenen Schritte modifiziert, und daß die Schaltung einen Detektor aufweist, der auf dem mobilen Gerät zum Erfassen eines Bezugspunktes auf dem Erdboden, auf dem das mobile Gerät fährt, wenn dieses sich auf ihm um seine vertikale Hauptachse (4) dreht, befestigt ist, und daß der Korrekturschaltkreis (8') einen Zähler (11) und einen Komparator (12) zum Zählen und Vergleichen der tatsächlichen Anzahl der ausgeführten Schritte mit der theoretischen Anzahl der Schritte zur Ausführung einer Drehung und unter Abziehen der Korrekturzahl aufweist.

4. Schaltung nach Anspruch 3, dadurch gekennzeichnet, daß der Detektor ein flexibler Lamellenunterbrecher (10) ist, der auf ein als Bezugspunkt dienendes Magnetband (14) anspricht.

**Claims**

1. A device for correction of the mechanical imperfections shown by the deviations in movement of the wheels of a moving body having two independent driven wheels (1, 2) driven each by a corresponding stepping-motor and mounted about one and the same axis (3) and effecting various movements ordered by a programming microprocessor, characterized in that a corrector circuit is connected to the said microprocessor in order to indicate to the latter a corrector number which modifies the number of steps carried out by the wheels with respect to the number of steps ordered by the programming in compensation of the deviations due to the mechanical imperfections, the said corrector circuit comprising a means of introduction of a predeterermined corrector number of steps into each quantity q of steps to be carried out by each motor, having 5 bistable electrical contacts each having in a first state the signification 0 and in a second state one of the significations 1 - 2 - 4 - 8 - 16 respectively, with a per-unit corrective capacity of 0,125° of rotation of the motor.

2. A device as in Claim 1, characterized in that the per-unit corrective capacity of the corrector circuit corresponds with 1 step for each quantity of 96 steps which each wheel (1, 2) must carry out.

3. A device for correction of the mechanical imperfections shown by the deviations in movement of the wheels of a moving body having two independent driven wheels (1, 2) driven each by a corresponding stepping-motor and mounted about one and the same axis (3) and effecting various movements ordered by a programming microprocessor, characterized in that a corrector circuit is connected to the said microprocessor in order to indicate to the latter a corrector number which modifies the number of steps carried out by the wheels with respect to the number of steps ordered by the programming in compensation of the deviations due to the mechanical imperfections, and in that the device comprises a detector mounted on the moving body for detecting a reference mark placed on the ground over which the said moving body is running when the latter turns on itself about its general vertical axis (4) and the corrector circuit (8') comprises a counter circuit (11) and a comparator (12) for counting and comparing the reel number of staps carried out with the theoretical number of steps for carrying out one turn and deducing from it the corrector number.

4. A device as in Claim 3, characterized in that the detector is a switch having a flexible-blade (10) which is sensitive to a magnetized tape (14) serving as the reference mark.

Fig. 1

Fig. 3

Fig. 2

## Fig. 4

## Fig. 5